# EUROPÄISCHE PATENTSCHRIFT

(11) **EP 2 827 111 B1**
(45) Veröffentlichungstag und Bekanntmachung des Hinweises auf die Patenterteilung: **28.08.2019**
(21) Anmeldenummer: 14002268.2
(22) Anmeldetag: 02.07.2014
(51) Int. Cl.: G01F 1/66, G01F 5/00

(54) **Ultraschallzähler**
Ultrasound meter
Compteur à ultrasons

(30) Priorität: 20.07.2013 DE 102013012139
(43) Veröffentlichungstag der Anmeldung: 21.01.2015
(73) Patentinhaber: Diehl Metering GmbH, 91522 Ansbach (DE)
(72) Erfinder: Kroemer, Harald, 91522 Ansbach (DE); Öfelein, Wilhelm, 91522 Ansbach (DE)
(74) Vertreter: Diehl Patentabteilung

(56) Entgegenhaltungen:
- EP-A2- 1 693 652
- DE-A1-102004 060 063
- DE-A1-102004 060 065
- DE-A1-102009 045 620
- DE-B3-102005 046 858
- JP-B2- 3 557 735

## Beschreibung

Die vorliegende Erfindung betrifft einen Ultraschallzähler zur Erfassung der Durchflussmenge eines Fluids, z.B. Wasser, insbesondere einen sogenannten Ultraschallgroßwasserzähler. Bei Ultraschallgroßwasserzählern handelt es sich um Wasserzähler mit Nennweiten ab 50 mm.

Aus der DE 10 2009 045 620 A1 ist ein Ultraschallströmungssensor mit einem Hohlleiter im Strömungsrohr beschrieben, wobei der Hohlleiter so ausgebildet ist, dass Ultraschallwellen von einem ersten Ultraschallwandler durch ein- oder mehrfache Reflexion an den Wänden des Hohlleiters zu einem zweiten Ultraschallwandler geleitet werden. Dabei ist der Hohlleiter ausgestaltet, um von dem fluiden Medium durchströmt zu werden.

In der DE 10 2004 060 063 A1 und der DE 10 2004 060 065 A1 ist eine in ein Strömungsrohr einsetzbare Ultraschall-Messvorrichtung mit zueinander geneigt angeordneten Ultraschallwandlern und an der gegenüberliegenden Wand angeordneter Reflexionsfläche beschrieben, welche eine V-förmige Ultraschall-Messstrecke aufweist.

Die EP 1 693 652 A2 offenbart einen Ultraschalldurchflussmesser, der einen im durchströmten Messkanal angeordneten Messkanaleinsatz sowie eine Halteplatte, an der die Reflektoren angeordnet sind, aufweist.

Aus JP 3 557735 B2 ist ein Ultraschalldurchflussmesser bekannt, der einen Strömungskanal aufweist sowie einen daran angeordneten Bypasskanal, in dem eine Ulraschall-Messstrecke vorgesehen ist. Der Bypasskanal nimmt einen Strömungsanteil der Gesamtströmung des Strömungskanals auf. Im Strömungskanal ist ein Strömungswiderstandselement vorgesehen, welches einen Druckabfall in dem Strömungskanal erzeugt, um einen Anteil der Gesamtströmung in dem Bypasskanal einzuleiten.

### Aufgabe der vorliegenden Erfindung

Die Aufgabe der vorliegenden Erfindung besteht darin, einen neuartigen Ultraschallzähler zur Verfügung zu stellen, welcher insbesondere auch als Ultraschallgroßwasserzähler mittels einer kostengünstigen Konstruktion verbesserte messtechnische Eigenschaften gewährleistet.

### Lösung der Aufgabe

Die vorliegende Aufgabe wird durch einen Durchflusszähler gemäß dem Anspruch 1 gelöst, der ein vorzugsweise rohrförmiges Gehäuse, welches einen Strömungskanal aufweist, umfasst sowie eine innerhalb des Strömungskanals angeordnete Ultraschall-Messstrecke mit Messkanal zur Erfassung der Durchflussmenge des Fluids,
wobei die Ultraschall-Messstrecke in einem Bypasskanal vorgesehen ist, der innerhalb des Strömungskanals angeordnet ist und der einen Strömungsanteil der Gesamtströmung des Strömungskanals aufnimmt, und
wobei der Strömungskanal als repräsentativer Anteil für die Erfassung der Durchflussmenge dient, wobei
im Bereich des Bypasskanals, jedoch außerhalb desselben, Mittel zur Erzeugung eines Druckabfalls in Form einer in dem Strömungskanal angeordneten Düse oder einer in dem Strömungskanal angeordneten Blende vorgesehen sind, derart, dass eine Einleitung des Strömungsanteils der Gesamtströmung in den Bypasskanal druckabfallbedingt erfolgt,
ein Messeinsatz als eine Baugruppe vorgesehen ist, die den Messkanal, einen Messkanalhalter sowie die Umlenkspiegel umfasst,
der Messeinsatz sich in einem Bypasshalter befindet und der Bypasshalter zusammen mit dem Messeinsatz und mit den Mitteln zur Erzeugung eines Druckabfalls in Längsrichtung zum Gehäuse in den Strömungskanal einführbar ist.

Aufgrund der Integration des Bypasskanals mit seiner Ultraschall-Messstrecke in den Strömungskanal des Gehäuses wird die Konstruktion des Ultraschallzählers einfacher, preiswerter und leichter skalierbar. Insbesondere kann ein aus Messrohr, Messrohrhalter sowie Reflektoren aufgebauter Messeinsatz als Baugruppe von Ultraschallzählern mit geringerer Nennweite als 50 mm somit auch für Ultraschallzähler mit einer Nennweite von mehr als 50 mm (und natürlich für Ultraschallzähler mit unterschiedlichen Nennweiten) verwendet werden, wodurch die Gesamtkosten deutlich erniedrigt werden können.

Dadurch, dass gemäß der Erfindung im Bereich des Bypasskanals Mittel zur Erzeugung eines Druckabfalls vorgesehen sind, wird in einfacher Weise ein Teil des Gesamtflusses in den Bypasskanal abgezweigt, d. h. zu diesem hingeführt. Auch werden hierdurch Unstetigkeiten und/oder gestörte Strömungen der Gesamtströmung nicht in den Bypasskanal mit übernommen, mit der Folge, dass deutlich bessere messtechnische Eigenschaften bezüglich der Überlaststabilität und der Unempfindlichkeit erreicht werden können als dies bei gestörten Strömungen der Fall ist.

Die Ultraschall-Messstrecke ist U-förmig ausgebildet. Das Ultraschallsignal nimmt dann einen U-förmigen Verlauf zwischen den beiden Ultraschallwandlern.

In vorteilhafter Weise ist der Messeinsatz als Baugruppe konzipiert, die den Messkanal, einen Messkanalhalter sowie die Umlenkspiegel umfasst. Der Messkanalhalter kann dafür gleichzeitig als Halterung für die Umlenkspiegel vorgesehen sein. Die Baugruppe kann zweckmäßigerweise als standardisierte Baugruppe für Ultraschallzähler unterschiedlicher Nennweite eingesetzt werden. Lediglich die betreffenden Mittel zur Erzeugung eines Druckabfalls müssen passend zur Nennweite bevorratet werden. Der Messeinsatz selber hingegen kann standardisiert verwendet werden.

Als Mittel zur Erzeugung des Druckabfalls ist eine vorzugsweise ringfömige Düse, vorzugsweise eine sogenannte Venturidüse, vorgesehen. Diese erzeugt durch Einschnürung der Strömung im Idealfall einen zum Durchfluss quadratischen Druckabfall.

Alternativ kann als Mittel zur Erzeugung eines Druckabfalls auch eine Blende, beispielsweise eine Zentralblende, zur Erzeugung einer ringförmigen oder ringabschnittförmigen Durchströmung vorgesehen sein. Auch dadurch erfolgt druckabfallbedingt eine Einleitung eines Teils des Gesamtflusses in den Bypasskanal. Die Zentralblende hat den Vorteil eines erhöhten Messeffekts vor allem im laminaren Strömungsbereich, da wegen des deutlich größeren Staudrucks im Zentrum der Strömung ein größerer Anteil in den Bypasskanal geleitet wird.

Die Oberflächenstrukturierung der Mittel zur Erzeugung eines Druckabfalls insbesondere in Form von Ausnehmungen sorgen vor allem bei kleinen Durchflüssen und somit bei eigentlich laminaren Strömungsverhältnissen für eine wirbelinduzierte Verstetigung der Reynoldszahl und damit einhergehend eine Verstetigung bzw. Linearisierung des Druckabfalls. Hieraus resultiert eine günstigere Zählerkennlinie mit geringerer Korrekturnotwendigkeit.

In vorteilhafter Weise können hierzu Kanäle und/oder Kerben vorgesehen sein. Diese, Strömungsturbulenzen induzierende, Oberflächenstrukturierung befindet sich zweckmäßigerweise auf der Anströmfläche und/oder der Anströmkante und/oder auch entlang des Durchgangskanals der Mittel zur Erzeugung eines Druckabfalls. Dadurch, dass der Bypasskanal im Querschnitt des Strömungskanals betrachtet außermittig d.h. exzentrisch zur Mittellinie des Strömungskanals, vorzugsweise in unmittelbarer Nähe der Wand des Gehäuses, angeordnet ist, kann ein besonders kurzer Abstand zwischen den Ultraschallwandlern und den Umlenkspiegeln eingehalten werden. Hieraus resultiert eine gute Signalqualität und damit eine gute Messgenauigkeit.

Zweckmäßigerweise ist auf der Einlaufseite zumindest die Stirnseite des Bypasskanals, d. h. dessen vorderseitiges Ende geschlossen, so dass das Fluid nicht in Längsrichtung zum Bypasskanal in diesen einströmen kann. Zweckmäßigerweise kann hierzu eine Kappe oder dergleichen vorgesehen sein. Hierdurch wird vermieden, dass aus der Hauptströmung abgeleitete "gestörte Strömungen" nicht unmittelbar d. h. unverändert in den Bypasskanal gelangen sondern einen für den Eintritt konstruktiv vorgesehenen Weg, in dem die abzuzweigende Strömung stabilisiert und/oder gemischt wird, durchlaufen müssen.

Zweckmäßigerweise strömt der abgezweigte Strömungsanteil in einem Winkel zur Längsrichtung des Messkanals betrachtet in den Bypasskanal ein, beispielsweise im rechten Winkel oder in einem schrägen Winkel oder sogar einem Winkel von größer 90° (von der Auslassrichtung des Bypasskanals betrachtet).

Am oder im Bereich des Einlaufs des Bypasskanals vorgesehene Strömungsleitmittel dienen ebenfalls dazu, den abgezweigten Strömungsanteil zu stabilisieren und/oder zu mischen und so stabilisiert bzw. gut durchmischt dem Messkanal bzw. der Messstrecke zuzuführen.

### Beschreibung der Erfindung anhand von Ausführungsbeispielen

Nachstehend werden unterschiedliche Ausgestaltungen der vorliegenden Erfindungen anhand von Ausführungsbeispielen näher erläutert. Wiederkehrende Merkmale sind der Übersichtlichkeit halber lediglich einmal mit einem Bezugszeichen versehen. Es zeigen:
- Fig. 1: eine Längsschnittdarstellung in perspektivischer Ansicht durch eine mögliche Ausgestaltung des erfindungsgemäßen Ultraschallzählers;
- Fig. 2: eine Längsschnittdarstellung in perspektivischer Ansicht durch einen Bypasskanal sowie durch die Mittel zur Erzeugung eines Druckabfalls gemäß einer weiteren Ausgestaltung;
- Fig. 3: eine Längsschnittdarstellung in perspektivischer Ansicht durch den Bypasskanal sowie durch die Mittel zur Erzeugung eines Druckabfalls gemäß einer weiteren Ausgestaltung;
- Fig. 4: eine perspektivische Ansicht einer weiteren Ausgestaltung der Mittel zur Erzeugung eines Druckabfalls in Verbindung mit einem Bypasskanal gemäß der vorliegenden Erfindung;
- Fig. 5: eine perspektivische Ansicht einer weiteren Ausgestaltung von Mitteln zur Erzeugung eines Druckabfalls in Verbindung mit einem Bypasskanal gemäß der vorliegenden Erfindung;
- Fig. 6: eine perspektivische Ansicht einer weiteren Ausgestaltung von Mitteln zur Erzeugung eines Druckabfalls in Verbindung mit einem Bypasskanal gemäß der vorliegenden Erfindung ;
- Fig. 7: verschiedene, stark vereinfachte Darstellungen von Strömungsverhältnissen im Vergleich sowie
- Fig. 8: ein graphischer Vergleich des Verlaufs der Reynoldszahl über dem Durchfluss und zwar zum einen in nicht linearisierter Form (Kurve A) zum anderen in linearisierter Form (Kurve B).

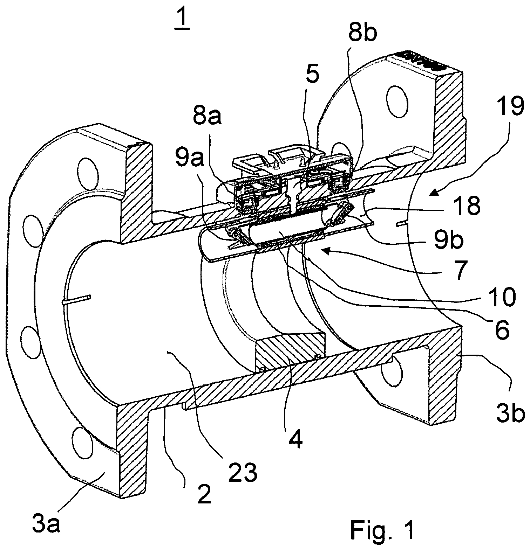

Bezugsziffer 1 in Fig. 1 zeigt eine zweckmäßige Ausgestaltung eines erfindungsgemäßen Ultraschallzählers in seiner Gesamtheit. Er umfasst ein, vorzugsweise rohrförmiges, Gehäuse 2, welches einen linearen Strömungskanal 23 aufweist und über Flansche 3a, 3b mit einer nicht dargestellten Fluidleitung verbunden werden kann. Das Gehäuse 2 stellt hierbei ein sogenanntes Einrohranschlussgehäuse dar.

An der Oberseite des Gehäuses 2 befinden sich zwei Ultraschallwandler 8a sowie 8b, die in zugehörigen Bohrungen in der Wandung des Gehäuses 2 positioniert sind. Die beiden Ultraschallwandler 8a sowie 8b stehen mit einer in Fig. 1 nicht dargestellten Auswerteeinheit in Verbindung.

Bei dem in Fig. 1 dargestellten Ultraschallzähler handelt es sich zweckmäßigerweise um einen sogenannten Ultraschallgroßwasserzähler mit einer Strömungskanal-Nennweite von mindestens 50 mm. Derartige Ultraschallgroßwasserzähler können Nennweiten des Strömungskanals 23 von bis zu 250 mm oder mehr aufweisen.

Erfindungsgemäß befindet sich innerhalb des Strömungskanals 23 des Gehäuses 2, vorzugsweise in exzentrischer Anordnung zur Mittellinie des Strömungskanals 23, im Bereich der beiden Ultraschallwandler 8a sowie 8b ein Bypasskanal mit einem Messeinsatz 7. Der Bypasskanal dient dazu, einen Strömungsanteil der durch den Strömungskanal 23 hindurchströmenden Gesamtströmung aufzunehmen. Dieser Strömungsanteil dient als zu messender, repräsentativer Anteil für die Erfassung der Gesamtdurchflussmenge.

Im Bereich des Bypasskanals sind zweckmäßigerweise Mittel 4 zur Erzeugung eines Druckabfalls vorgesehen. Sie bewirken einen Staudruck und sorgen dafür, dass ein Teil der Gesamtströmung zum Bypasskanal und durch diesen hindurch geleitet wird. Bei den Mittel zur Erzeugung eines Druckabfalls handelt es sich z. B. um eine Düse 4, insbesondere in Form einer sogenannten Venturi-Düse. Die Venturi-Düse erzeugt durch Einschnürung der Strömung in dem Strömungskanal 23 einen Druckabfall, wodurch ein Teil des Gesamtflusses in den Bypasskanal geleitet wird und danach zum Auslass 19 gelangt.

Der in Fig. 1 gezeigte Messeinsatz 7 gewährleistet eine U-förmige Messstrecke und umfasst ein Messrohr 10, eine Messrohrhalterung 6 sowie zwei schräg angeordnete Umlenkspiegel 9a sowie 9b. Der Messeinsatz 7 ist als Baugruppe bestehend aus den vorgenannten Teilen konzipiert und kann somit auch für andere Nennweiten verwendet werden. Umgeben wird der Messeinsatz 7 von einem rohrförmigen Bypasshalter 18 beispielsweise in Form eines Kunststoffrohrs. Die Anordnung bestehend aus der Düse 4, dem Bypasshalter 18 sowie dem Messeinsatz 7 kann in einfacher Weise über die stirnseitige Öffnung des Gehäuses 2 eingeschoben und mittels eines sich durch eine gemeinsame Durchgangsöffnung 24 sich erstreckender Zapfens 5 zum Gehäuse 2 fixiert werden.

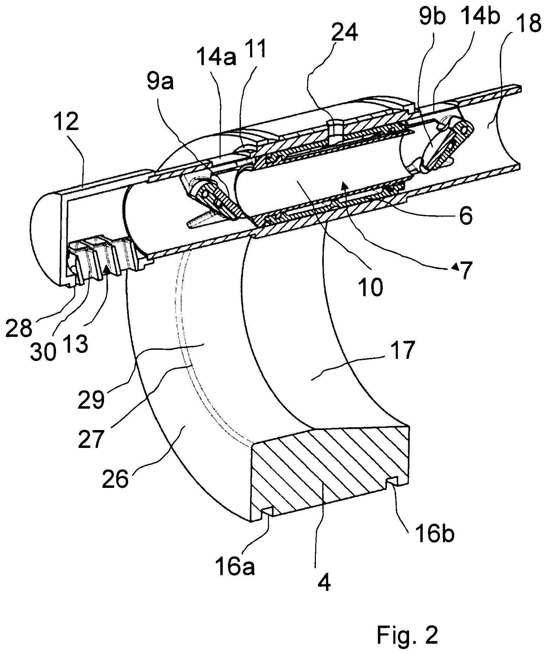

Fig. 2 zeigt eine weitere mögliche Ausgestaltung des Bypasskanals 7 sowie der Mittel zur Erzeugung eines Druckabfalls zum Einsatz in dem erfindungsgemäßen Ultraschallzähler. Der Messeinsatz 7 umfasst den Messkanal 10 in Form eines Messrohrs, welches von der Messrohrhalterung 6 umgeben ist. Die Messrohrhalterung 6 ist vorzugsweise in Form zweier längs geteilter Hälften ausgebildet, die im zusammengesetzten Zustand nicht nur das Messrohr 10, sondern auch die beiden Umlenkspiegel 9a sowie 9b umschließen und so in ihrer Position fixieren. Der Messeinsatz 7 befindet sich in dem, vorzugsweise rohrförmigen Bypasshalter 18, der in den oberhalb der Umlenkspiegel 9a sowie 9b befindlichen Zonen jeweils einen außenseitig abgeflachten Durchschallbereich 14a sowie 14b mit einer reduzierten Materialstärke aufweist.

In den Durchschallbereichen 14a sowie 14b durchschallen die Ultraschallwandler 8a, 8b den Bypasshalter 18 in Richtung der im Inneren befindlichen Umlenkspiegel 9a sowie 9b. Die dort auf der Innenseite des Bypasshalters 18 vorgesehene gekrümmte Fläche wirkt als Fokussierlinse und fokussiert das vom jeweiligen Umlenkspiegel 9a sowie 9b reflektierte Schallfeld wirksam auf den jeweiligen empfangenden Ultraschallwandler 8a bzw. 8b, wodurch die Empfangsspannung größer ausfällt als bei einem Rohr konstanter Wandstärke (sofern das Rohrmaterial eine größere akustische Impedanz aufweist als das umgebende Medium).

Der Bypasshalter 18 besteht aus durchschallfähigem Material, vorzugsweise aus Kunststoff. Im Bereich des Zulaufs des Bypasskanals befindet sich ein Endstück 12 in Form einer Kappe, welche die Stirnseite des Bypasshalters in seiner Verlängerung verschließt und in der zur Mittelachse des Ultraschallzählers zugewandten Seite eine Öffnung 28 besitzt, in der sich ein Strömungsformer 13 befindet. Der Strömungsformer 13 ist ebenfalls als Kunststoffeinsatzteil vorgesehen und umfasst mehrere voneinander getrennte Strömungskanäle 30.

Die Düse 4 weist eine Anströmfläche 26, eine Anströmkante 27, einen Durchlassbereich 29 sowie einen sich zum Auslass hin verjüngenden Abschnitt 17 auf. Durch den durch die Düse 4 bedingten Druckabfall wird ein Teil des Gesamtflusses durch die Kanäle 30 des Strömungsformers 13 hindurch in einem Winkel von etwas mehr als 90° zur Längsachse des Messkanals 10 eingeleitet. Dieser Teilstrom kann mit einem bewährten Ultraschall-Messverfahren und hierzu vorgesehenen Standardbauteilen präzise gemessen werden. Die Konstruktion bewirkt, dass unabhängig vom Strömungsprofil (laminar oder turbulent) der Gesamtströmung im Strömungskanal 23 stets ein repräsentativer Anteil der Gesamtströmung abgeteilt und dem Bypasskanal zugeführt wird. Der in der Öffnung 28 befindliche Strömungsformer 13 besitzt aufgrund seiner die Strömung stabilisierenden Geometrie den Vorteil, dass die Strömung möglichst stabilisiert und gerichtet in das Endstück 12 einfließt. Durch die Orientierung des Teilstroms aufgrund des Strömungsformers 13 in einem Winkel von mehr als 90 ° zur Mittelachse des Messkanals 10 wird das Fluid Im Endstück 12 also im Zulauf des Messkanals 10 stark vermischt und verwirbelt und danach in Richtung des Messkanals 10 weiter transportiert. Auf diese Weise lassen sich strömungsprofilabhängige Effekte weitgehend vermeiden. An der Außenseite der Düse 4 befinden sich zwei Nuten 16a, 16b zur Aufnahme je einer (nicht dargestellten Dichtung).

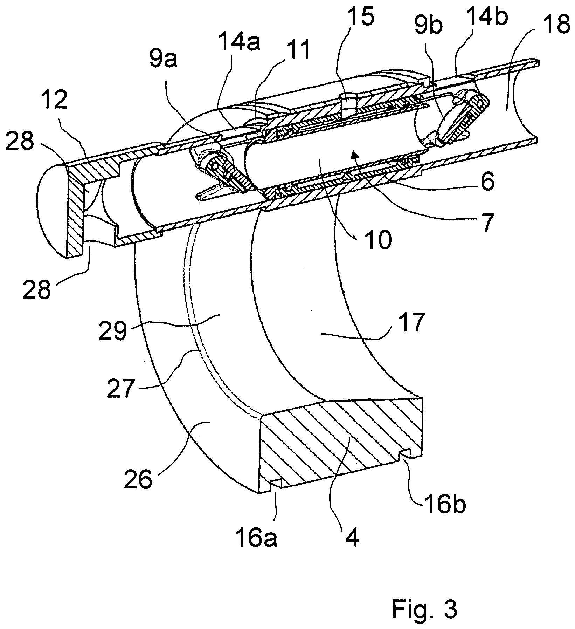

Bei der Ausgestaltung gem. Fig. 3 liegt eine andere Ausgestaltung des Endstücks 12 vor. Ansonsten ist die Ausgestaltung mit der Ausgestaltung nach Fig. 2 identisch. Das Endstück umfasst mehrere Öffnungen 28, die, vorzugsweise kreisförmig, um den Umfang der Kappe bzw. des Endstücks 12 verteilt angeordnet sind. Das Medium fließt durch die Öffnungen 28 in das Endstück 12 hinein. Es bilden sich hierbei je nach deren Durchmesser mehr oder weniger ausgeprägte Freistrahlen aus, die im Zentrum des Endstücks 12 aufeinandertreffen. Hierdurch wird das Fluid stark vermischt und verwirbelt in Richtung des Messeinsatzes 7 weitertransportiert. Auf diese Weise lassen sich strömungsprofilabhängige Effekte weitgehend vermeiden. Außerdem kann über die Variation der Summenfläche der Öffnungen und den dadurch ausgebildeten Druckabfall der Kennlinienverlauf auf konstruktiv einfache Weise linearisiert sowie der Überlastbereich besser definiert werden.

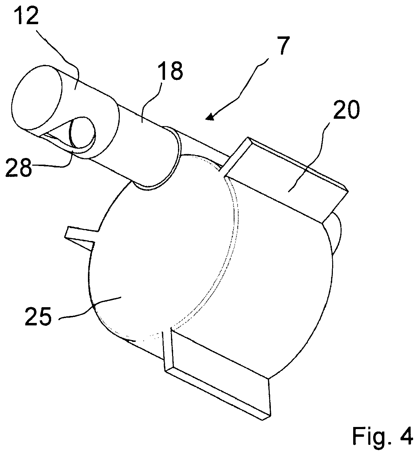

In der Ausgestaltung gemäß Fig. 4 ist statt einer ringförmigen Düse eine Zentralblende 25 vorgesehen, die über einzelne umfänglich verteilte Streben 20 mit dem (in Fig. 4 nicht dargestellten) Gehäuse 2 in Verbindung steht. Diese Bauform hat den Vorteil eines erhöhten Messeffekts vor allem im laminaren Strömungsbereich, da wegen des deutlich größeren Staudrucks im Zentrum der Strömung ein größerer Anteil durch die Öffnungen 28 in den Bypasskanal geleitet wird.

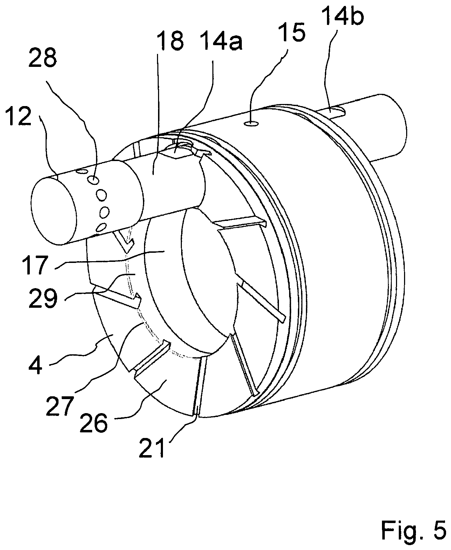

Aus der Fig. 5 ist eine weitere Ausgestaltung der Mittel zur Erzeugung des Druckverlustes dargestellt. Auch hierbei handelt es sich um eine Venturi-Düse 4. Anstelle einer definierten, über den Durchmesser stetigen kreisförmigen Anströmkante 27 besitzt bei dieser Ausgestaltung die umlaufende Kante 27 einen, durch kleine Kanäle 21 unterbrochenen Verlauf. Diese Oberflächenbeschaffenheit der Anströmfläche 26 und/oder der Kante 27 und/oder des Durchlassbereichs 29 sorgt bei kleinen Durchflüssen und somit bei eigentlich laminaren Strömungsverhältnissen für eine wirbelinduzierte Verstetigung der Reynoldszahl bzw. damit einhergehend für eine Verstetigung des Druckabfalls.

Ferner ist in Fig. 5, lediglich beispielhaft, ein Endstück 12 mit einer Vielzahl von kleinen umfänglich verteilten Öffnungen 28 dargestellt. Die Vielzahl der kleinen Öffnungen 28 bewirkt die Ausbildung einer Vielzahl von Freistrahlen, die alle im Zentrum der Kappe 12 aufeinandertreffen und verwirbeln. Hierdurch entsteht eine besonders gut durchmischte und somit vorteilhaft zu messende, stabile Strömung in der Ultraschallmesszone des Messeinsatzes 7.

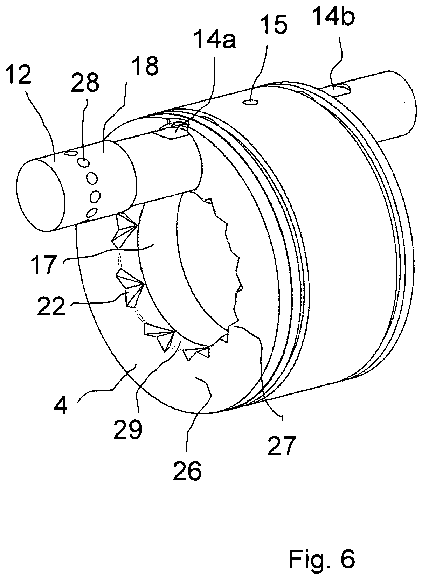

Gemäß Ausgestaltung nach Fig. 6 sind entlang der Anströmkante 27 eine Vielzahl auf den Umfang verteilt angeordneter Kerben 22 vorgesehen. Die Vielzahl der Kerben 22 entlang des Umfangs erzeugen die gewünschte gestörte Strömung im Innenraum der Mittel zur Erzeugung des Druckabfalls in Form der Düse 4. Zweckmäßigerweise kann die Oberflächenstruktur der Düsenkante beispielsweise in Form der Kerben 22 auch ungleichmäßig verteilt und/oder nicht identisch geformt ausgebildet sein. Auch können sie in den Durchlassbereich 29 der Düse 4 hineinragen.

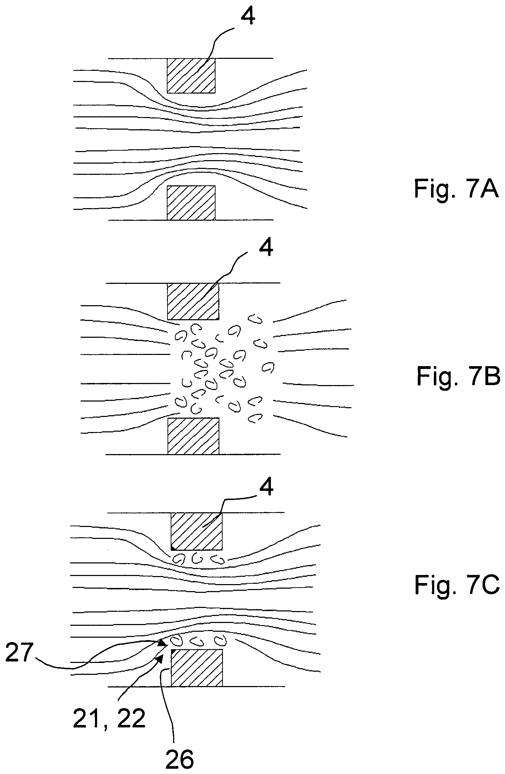

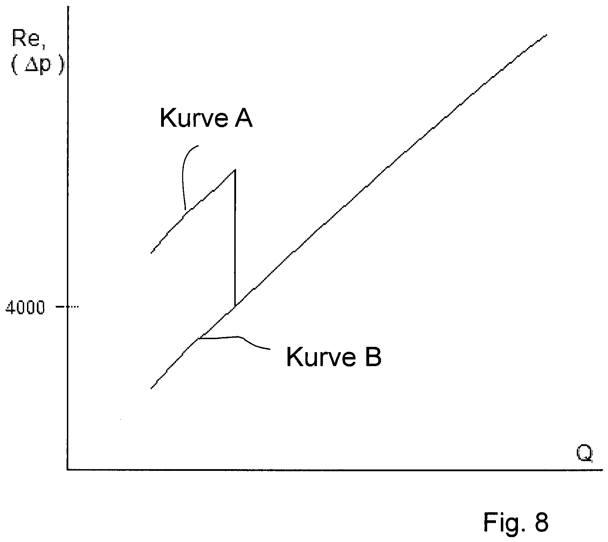

In Fig. 7 wird der besondere Effekt der vorgenannten Oberflächenstrukturen in Form von beispielsweise Kanälen 21 und/oder Kerben 22 erläutert. In der Ausgestaltung der Fig. 7A strömt langsam fließendes Medium laminar durch eine vereinfacht dargestellte Düse 4. Erhöht man den Durchfluss, erreicht man irgendwann den Umschlagpunkt der Strömung, wobei sich dann schlagartig im Düseninnenraum Wirbel zu bilden beginnen und die Strömung in den turbulenten Strömungszustand kippt. Damit einhergehend verringern sich an diesem Durchflusspunkt schlagartig die Reynoldszahl von einem Wert von ca. 4.000 auf einen kleineren Wert sowie der Druckabfall an der Düse 4, der aber gleichzeitig den Bypassdurchfluss definiert. In diesem Durchflusswert wird die Kennlinie des Ultraschallzählers somit einen Knick aufweisen, der mathematisch sowie messtechnisch schwer zu korrigieren ist. Dieser Knick der Reynoldszahl ist aus der Fig. 8 (vgl. dort Kurve A) ersichtlich.

Die in den vorgenannten Figuren beispielhaft dargestellten Oberflächenstrukturen der Anströmkanten 27 der Düse 4 sind in der Fig. 7C als kleine schwarze Dreiecke rein schematisch dargestellt. Sie erzeugen bei den in Fig.7A dargestellten laminaren Strömungsverhältnissen kleine Wirbel im Bereich der wandnahen Kantenzone, wodurch die Reynoldszahl und der Druckabfall zwar kleiner werden aber die Zählerkennlinie hingegen deutlich stetiger. Hierdurch reduziert sich der Aufwand für eine Linearisierung des Ultraschallzählers. Eine konstruktiv entsprechend linearisierte Kurve ist als Kurve B in Fig. 8 schematisch dargestellt.

Die vorliegende Erfindung ermöglicht es, insbesondere für sogenannte Ultraschallgroßwasserzähler einfach und kostengünstig eine genaue Mengenmessung an Fluid vorzunehmen. Auch Unterkombinationen der gezeigten Merkmale sind ausdrücklich vom Offenbarungsgehalt des Anmeldungsgegenstandes umfasst.

### BEZUGSZEICHENLISTE

- 1: Ultraschallzähler
- 2: Gehäuse
- 3: Flansch (3a, 3b)
- 4: Mittel zur Erzeugung eines Druckabfalls
- 5: Zapfen
- 6: Messkanalhalter
- 7: Messeinsatz
- 8: Ultraschallwandler (8a, 8b)
- 9: Umlenkspiegel (9a, 9b)
- 10: Messkanal
- 11: Ausnehmung
- 12: Endstück
- 13: Strömungsformer
- 14: Durchschallbereich (14a, 14b)
- 15: Zapfen
- 16: Nut (16a, 16b)
- 17: Verjüngender Abschnitt
- 18: Bypasshalter
- 19: Auslauf
- 20: Strebe
- 21: Kanal
- 22: Kerbe
- 23: Strömungskanal
- 24: Durchgangsöffnung
- 25: Zentralblende
- 26: Anströmfläche
- 27: Anströmkante
- 28: Öffnung
- 29: Durchlassbereich
- 30: Strömungskanal

## Patentansprüche

1. Ultraschallzähler zur Verbindung mit einem Fluidnetz zur Erfassung der Durchflussmenge eines Fluids mit
einem, vorzugsweise rohrförmigen, Gehäuse (2), welches einen Strömungskanal (23) aufweist, sowie
einer innerhalb des Strömungskanals (23) angeordneten Ultraschall-Messstrecke mit Messkanal (10) zur Erfassung der Durchflussmenge des Fluids,
wobei die Ultraschall-Messstrecke in einem Bypasskanal vorgesehen ist, der innerhalb des Strömungskanals (23) angeordnet ist und der einen Strömungsanteil der Gesamtströmung des Strömungskanals (23) aufnimmt, und
wobei der Strömungsanteil als repräsentativer Anteil für die Erfassung der Durchflussmenge dient,
**dadurch gekennzeichnet, dass**
im Bereich des Bypasskanals, jedoch außerhalb desselben, Mittel zur Erzeugung eines Druckabfalls in Form einer in dem Strömungskanal (23) angeordneten Düse (4) oder einer in dem Strömungskanal (23) angeordneten Blende vorgesehen sind, derart, dass eine Einleitung des Strömungsanteils der Gesamtströmung in den Bypasskanal druckabfallbedingt erfolgt,
die Ultraschall-Messstrecke U-förmig ist,
ein Messeinsatz (7) als eine Baugruppe vorgesehen ist, die den Messkanal (10), einen Messkanalhalter (6) sowie Umlenkspiegel (9a, 9b) umfasst,
der Messeinsatz (7) sich in einem Bypasshalter (18) befindet und der Bypasshalter (18) zusammen mit dem Messeinsatz (7) in Längsrichtung zum Gehäuse (2) in den Strömungskanal (23) einführbar ist.

2. Ultraschallzähler nach Anspruch 1,
**dadurch gekennzeichnet, dass**
als Düse (4) eine Venturidüse vorgesehen ist.

3. Ultraschallzähler nach Anspruch 1,
**dadurch gekennzeichnet, dass**
als Blende eine Zentralblende (25) zur Erzeugung einer ringförmigen oder ringabschnittförmigen Durchströmung vorgesehen ist.

4. Ultraschallzähler nach mindestens einem der vorhergehenden Ansprüche,
**dadurch gekennzeichnet, dass**
die Mittel zur Erzeugung eines Druckabfalls eine Oberflächenstrukturierung aufweisen.

5. Ultraschallzähler nach mindestens einem der vorhergehenden Ansprüche,
**dadurch gekennzeichnet, dass**
die Mittel zur Erzeugung eines Druckabfalls mit Ausnehmungen, insbesondere Kanälen (21) und/oder Kerben (22), versehen sind.

6. Ultraschallzähler nach Anspruch 4 oder 5,
**dadurch gekennzeichnet, dass**
die Oberflächenstrukturierung oder die Ausnehmungen auf der Anströmfläche (26) und/oder der Anströmkante (27) vorgesehen sind.

7. Ultraschallzähler nach mindestens einem der vorhergehenden Ansprüche,
**dadurch gekennzeichnet, dass**
der Bypasskanal im Querschnitt des Strömungskanals (23) betrachtet exzentrisch zur Mittellinie des Strömungskanals (23) angeordnet ist.

8. Ultraschallzähler nach mindestens einem der vorhergehenden Ansprüche,
**dadurch gekennzeichnet, dass**
auf der Einlaufseite zumindest die Stirnseite des Bypasskanals geschlossen ist.

9. Ultraschallzähler nach mindestens einem der vorhergehenden Ansprüche,
**dadurch gekennzeichnet, dass**
der abgezweigte Strömungsanteil in einem Winkel zur Längsrichtung des gerade ausgerichteten Messkanals (10) in den Bypasskanal einströmt.

10. Ultraschallzähler nach mindestens einem der vorhergehenden Ansprüche,
**dadurch gekennzeichnet, dass**
am Einlauf oder im Bereich des Einlaufs des Bypasskanals Strömungsleitmittel vorgesehen sind, mittels denen der abgezweigte Strömungsanteil stabilisiert und/oder gemischt wird.

11. Ultraschallzähler nach mindestens einem der vorhergehenden Ansprüche,
**dadurch gekennzeichnet, dass**
der Messeinsatz (7) sich in einem rohrförmigen Bypasshalter (16) befindet.

12. Ultraschallzähler nach mindestens einem der vorhergehenden Ansprüche,
**dadurch gekennzeichnet, dass**
die Mittel zur Erzeugung eines Druckabfalls (4) in Längsrichtung zum Gehäuse (2) in den Strömungskanal (23) einführbar sind.

## Claims

1. Ultrasonic meter for connection to a fluid network, for detecting the throughflow rate of a fluid, having
a preferably tubular housing (2), which has a flow channel (23), and
an ultrasound measurement path, arranged within the flow channel (23), with a measurement channel (10) for detecting the throughflow rate of the fluid,
wherein the ultrasound measurement path is provided in a bypass channel which is arranged within the flow channel (23) and which receives a flow fraction of the total flow of the flow channel (23), and
wherein the flow fraction serves as a representative fraction for the detection of the throughflow rate,
**characterized in that**
means for generating a pressure drop in the form of a nozzle (4) arranged in the flow channel (23) or of a screen arranged in the flow channel (23) are provided in the region of the bypass channel, albeit outside the latter, such that an introduction of the flow fraction of the total flow into the bypass channel is realized due to a pressure drop,
the ultrasound measurement path is U-shaped,
a measurement insert (7) is provided as a subassembly which comprises the measurement channel (10), a measurement channel holder (6) and deflecting mirrors (9a, 9b),
the measurement insert (7) is situated in a bypass holder (18), and the bypass holder (18) is able to be introduced together with the measurement insert (7) into the flow channel (23) in the longitudinal direction with respect to the housing (2).

2. Ultrasonic meter according to Claim 1,
**characterized in that**
a Venturi nozzle is provided as a nozzle (4).

3. Ultrasonic meter according to Claim 1,
**characterized in that**
a central screen (25) for generating a ring-shaped or ring segment-shaped throughflow is provided as a screen.

4. Ultrasonic meter according to at least one of the preceding claims,
**characterized in that**
the means for generating a pressure drop have a surface structuring.

5. Ultrasonic meter according to at least one of the preceding claims,
**characterized in that**
the means for generating a pressure drop are provided with recesses, in particular channels (21) and/or notches (22).

6. Ultrasonic meter according to Claim 4 or 5,
**characterized in that**
the surface structuring or the recesses is/are provided on the incident-flow surface (26) and/or on the incident-flow edge (27).

7. Ultrasonic meter according to at least one of the preceding claims,
**characterized in that**
the bypass channel, as viewed in the cross section of the flow channel (23), is arranged eccentrically with respect to the midline of the flow channel (23).

8. Ultrasonic meter according to at least one of the preceding claims,
**characterized in that**
at least the end side of the bypass channel is closed on the inflow side.

9. Ultrasonic meter according to at least one of the preceding claims,
**characterized in that**
the branched-off flow fraction flows into the bypass channel at an angle to the longitudinal direction of the measurement channel (10), which is oriented straight.

10. Ultrasonic meter according to at least one of the preceding claims,
**characterized in that**
provided at the inflow or in the region of the inflow of the bypass channel are flow-conducting means, by means of which the branched-off flow fraction is stabilized and/or mixed.

11. Ultrasonic meter according to at least one of the preceding claims,
**characterized in that**
the measurement insert (7) is situated in a tubular bypass holder (16).

12. Ultrasonic meter according to at least one of the preceding claims,
**characterized in that**
the means for generating a pressure drop (4) are able to be introduced into the flow channel (23) in the longitudinal direction with respect to the housing (2).

## Revendications

1. Compteur à ultrasons destiné à être relié à un réseau de fluide pour détecter le débit d'un fluide, comprenant
un boîtier (2), de préférence tubulaire, qui comporte un canal d'écoulement (23), et
une section de mesure par ultrasons disposée à l'intérieur du canal d'écoulement (23) et comprenant un canal de mesure (10) destiné à détecter le débit du fluide,
dans lequel la section de mesure par ultrasons est prévue dans un canal de dérivation qui est disposé à l'intérieur du canal d'écoulement (23) et qui reçoit une composante d'écoulement de l'écoulement total du canal d'écoulement (23), et
dans lequel la composante d'écoulement sert de composante représentative pour la détection du débit,
**caractérisé en ce qu'**il est prévu dans la zone du canal de dérivation, mais à l'extérieur de celui-ci, des moyens sous la forme d'une buse (4) disposée dans le canal d'écoulement (23) ou d'une chicane disposée dans le canal d'écoulement (23) pour générer une chute de pression, de manière à ce que la composante d'écoulement de l'écoulement total soit acheminée vers le canal de dérivation du fait de la chute de pression,
dans lequel la section de mesure par ultrasons est en forme de U,
il est prévu un élément de mesure (7), sous la forme d'un module, qui comprend le canal de mesure (10), un support de canal de mesure (6) ainsi que des miroirs de renvoi (9a, 9b),
l'élément de mesure (7) se trouve dans un support de dérivation (18) et le support de dérivation (18) peut être introduit avec l'élément de mesure (7) dans le canal d'écoulement (23) dans une direction longitudinale par rapport o au boîtier (2).

2. Compteur à ultrasons selon la revendication 1, **caractérisé en ce qu'**il est prévu, en tant que buse (4), une buse venturi.

3. Compteur à ultrasons selon la revendication 1, **caractérisé en ce qu'**il est prévu, en tant que chicane, une chicane centrale (25) permettant de générer un écoulement annulaire ou en forme de section d'anneau.

4. Compteur à ultrasons selon au moins l'une des revendications précédentes, **caractérisé en ce que** les moyens destinés à générer une chute de pression présentent une structuration de surface.

5. Compteur à ultrasons selon au moins l'une des revendications précédentes, **caractérisé en ce que** les moyens destinés à générer une chute de pression sont munis d'évidements, en particulier de canaux (21) et/ou d'entailles (22).

6. Compteur à ultrasons selon la revendication 4 ou 5, **caractérisé en ce que** la structuration de surface ou les évidements sont prévus sur la surface d'attaque (26) et/ou sur le bord d'attaque (27).

7. Compteur à ultrasons selon au moins l'une des revendications précédentes, **caractérisé en ce que** le canal de dérivation, vu en coupe transversale, du canal d'écoulement (23), est disposé de manière excentrique par rapport à l'axe central du canal d'écoulement (23).

8. Compteur à ultrasons selon au moins l'une des revendications précédentes, **caractérisé en ce qu'**au moins la face frontale du canal de dérivation est fermée côté entrée.

9. Compteur à ultrasons selon au moins l'une des revendications précédentes, **caractérisé en ce que** la composante d'écoulement dérivée pénètre dans le canal de dérivation en formant un certain angle par rapport à la direction longitudinale du canal de mesure (10).

10. Compteur à ultrasons selon au moins l'une des revendications précédentes, **caractérisé en ce qu'**il est prévu à l'entrée ou dans la zone de l'entrée du canal de dérivation des moyens de guidage de l'écoulement au moyen desquels la composante d'écoulement dérivée est stabilisée et/ou mélangée.

11. Compteur à ultrasons selon au moins l'une des revendications précédentes, **caractérisé en ce que** l'élément de mesure (7) se trouve dans un support de dérivation tubulaire (16).

12. Compteur à ultrasons selon au moins l'une des revendications précédentes, **caractérisé en ce que** les moyens destinés à générer une chute de pression (4) dans la direction longitudinale par rapport au boîtier (2) peuvent être introduits dans le canal d'écoulement (23).
